# EUROPÄISCHE PATENTSCHRIFT

(11) **EP 1 590 242 B1**
(45) Veröffentlichungstag und Bekanntmachung des Hinweises auf die Patenterteilung: **27.12.2006**
(21) Anmeldenummer: 04700015.3
(22) Anmeldetag: 06.02.2004
(51) Int. Cl.: B64D 11/00, B64D 11/04

(54) **VERTIKALFÖRDEREINRICHTUNG FÜR DEN TRANSPORT VON VERPFLEGUNGSGÜTERN IN EINEM FLUGZEUG MIT MINDESTENS ZWEI ÜBEREINANDER ANGEORDNETEN DECKS**
VERTICAL CONVEYING DEVICE FOR CONVEYING FOOD ITEMS IN AN AIRCRAFT COMPRISING AT LEAST TWO SUPERIMPOSED DECKS
DISPOSITIF DE TRANSPORT VERTICAL POUR LE TRANSPORT D'ARTICLES DE RESTAURATION DANS UN AVION COMPORTANT AU MOINS DEUX PONTS SUPERPOSES

(30) Priorität: 07.02.2003 DE 10305028
(43) Veröffentlichungstag der Anmeldung: 02.11.2005
(73) Patentinhaber: Airbus Deutschland GmbH, 21129 Hamburg (DE)
(72) Erfinder: BAATZ, Andreas, 21644 Sauensiek (DE)
(74) Vertreter: Hansmann, Dierk
(86) Internationale Anmeldenummer: PCT/DE2004/000213
(87) Internationale Veröffentlichungsnummer: WO 2004/069656

(56) Entgegenhaltungen:
- DE-A- 4 208 438
- US-A- 5 074 496
- US-A- 6 152 287
- US-A1- 2001 045 326

## Beschreibung

Die Erfindung betrifft eine Vertikalfördereinrichtung für den Transport von verpflegungsgütern in einem Flugzeug mit mindestens zwei übereinander angeordneten Decks, wobei Verpflegungsgüter von einem als Frachtdeck ausgebildeten unteren Deck in ein oberes Deck zu transportieren sind, im wesentlichen bestehend aus einer Fördereinrichtung, die mit oberhalb des Frachtdecks angeordneten Führungsschienen zusammenwirkt.

In der DE 199 00 256 C2 ist ein Verfahren zum Vertikaltransport von Verpflegungsgütern angegeben, wobei der zu befördernde Verpflegungsbehälter (z.B. Trolley) in einen speziellen Förderkorb eingebracht wird, welcher das Transportgut von einem unteren Deck zu einem oberen Deck bringt. Eine Hubeinrichtung ist im als Frachtdeck ausgebildeten unterem Deck installiert. Eine ziemlich komplexe Einrichtung zur Justierung der Hubeinrichtung ist notwendig, um flugzeugseitige Verformungen der Struktur im Flug auszugleichen und damit ein Verkanten des Förderkorbs im Förderschacht zu vermeiden, wenn der Korb von Deck zu Deck bewegt wird. Die gesamte Einrichtung einer festen Installation im Flugzeug bedarf Platz, welcher im Frachtdeck dann nicht mehr für Transportkapazität zur Verfügung steht. Mit einem festen Einbau ist auch die Durchgängigkeit für Container im Frachtraum nicht mehr gegeben, was die Auslegungsflexibilität des Flugzeugs wesentlich einschränken würde.

Bei der US 6,152,287 ist für den Vertikaltransport von Verpflegungsbehältnissen ein System von einer Hubspindel, Förderkäfigen und Trolleys angegeben. Zur Fixierung des Käfigs im Lift dienen besondere Ankerelemente, welche die Käfigrollen festhalten. In dem Dokument ist ersichtlich, dass der gesamte Aufzug vertikale Schienen im Frachtraum und am Passagierdeck benötigt. Auch hier sind im Frachtdeck Installationen für die Hubeinrichtung notwendig, die Platz beanspruchen und die Durchgängigkeit des Frachtraumes behindern.

Aus US 5, 322, 244 ist unter anderem in Fig. 10 eine Vertikalfördereinrichtung für Catering-Container gezeigt. Es ist ein Teleskoplift vorgesehen, der ausgehend von einem stationären Abschnitt im Hauptdeck bewegliche Teleskopabschnitte in den Frachtraum absenken kann, die mittels Greifer den Container greifen und ihn in die Küche im Hauptdeck transportieren. Über eine Sicherung des Containers bei einem Liftbetrieb während des Fluges ist jedoch nichts offenbart und durch auftretende Böen bzw. Beschleunigungen im Flugzeug können die im beladenen Zustand recht schweren Container aus der Transportlage geraten und ein zuverlässiger Betrieb des Teleskopliftes ist nicht gewährleistet.

Die DE 199 55 801 A1 zeigt eine Vertikalfördereinrichtung, wobei ein Transportkorb an einem Mast vertikal verfahrbar angeordnet ist. In einer Ausführungsform ist ersichtlich, dass auch unterhalb der unteren Mastbefestigung eine Ebene vorgesehen ist, auf die der Transportkorb abgesenkt werden kann. Für diese Hebe- und Senkfunktion sind Hubscheren als zweite Fördereinrichtung - unabhängig von der Förderung am Mast - vorgesehen, die seitlich am Transportkorb angreifen und durch Bewegung der Scheren den Transportkorb heben und gleichzeitig führen. Mit dieser Fördereinrichtung ist es beispielsweise vorgesehen, eine Be- oder Entladung von Versorgungsgütern durch eine Klappe eines Flugzeuges vertikal nach unten vorzunehmen. Diese zusätzliche Transportmöglichkeit weist jedoch keine Transportsicherung auf, wie es beispielsweise beim Betreiben der Fördereinrichtung während des Fluges unerlässlich ist.

Eine weitere Vertikalfördereinrichtung ist aus der DE-A-42 08 438 bekannt.

Zusammenfassend kann somit für die vorstehend beschriebenen bekannten Lösungen des Vertikaltransports von Verpflegungsgütern festgestellt werden, dass es sich zumeist um das Prinzip handelt, Behälter (z.B. Trolleys) mittels Hubeinrichtungen, die im Frachtraum Installationen notwendig machen, vertikal zu transportieren. Damit kann jedoch die Durchgängigkeit des Frachtraums für eine gute Flexibilität bei der Beladung mit Frachtcontainern nicht gewährleistet werden, da dann der Frachtraumquerschnitt durch den Lifteinbau versperrt wird.

Eine alternative Lösung zeigt eine Teleskoplifteinrichtung, die im Hauptdeck angeordnet ist und bewegliche Teleskopteile in einen darunter angeordneten Frachtcontainer eingreifen. Mit einem abgesenkten Teleskopteil, das Greifmittel für einen Container aufweist, wird der Transport eines Containers vom unterhalb des Hauptdecks angeordnetem Frachtdeck realisiert. Für die Anwendung im Flugbetrieb ist dies jedoch wegen der Eigenbewegung des Flugzeugs nicht ohne weiteres möglich, da für ein solches Konstruktionskonzept eine ständige Sicherung des Transportguts gegen unkontrollierte Bewegungen und Schwingungen unabdingbar ist und derartige Sicherungselemente in dieser Lösung nicht vorgesehen sind.

Nach den im Vorstehenden erwähnten Aspekten ist es nunmehr Aufgabe der Erfindung, eine Vertikalfördereinrichtung auszubilden, die die Durchgängigkeit des Frachtraums bei der Beladung mit Fracht- und Catering-Containern nicht behindert durch Vermeidung eines festen Lifteinbaus im Frachtraum sowie eine zuverlässige und ständige sichere Fixierung des Transportbehälters während des Liftbetriebs gewährleistet.

Diese Aufgabe wird erfindungsgemäß durch die im Patentanspruch 1 genannten Maßnahmen gelöst.

Dabei ist nach Anspruch 1 insbesondere vorteilhaft, dass eine Sicherung des Transportbehälters bei der Vertikalförderung auch während eines Fluges des Verkehrsflugzeuges erfolgt und gleichzeitig eine Gewährleistung der Durchgängigkeit des Frachtraums bei der Beladung mit Fracht- und Catering-Containern gegeben ist, d.h. es ist kein fester Lifteinbau im Frachtraum notwendig. Als weitere Vorteile ergeben sich Möglichkeiten des direkten Lift-Zugriffs auf Standard-Behälter ohne zusätzliche bewegliche Transportkäfige. Ein zusätzlicher Einschubvorgang eines Verpflegungsbehälters in einen Transportkäfig kann vermieden werden, was zur Minimierung der Lift-Zykluszeit beiträgt. Eine Abänderung bzw. strukturelle Ergänzung (Beschläge) von StandardBehältern (z.B. Trolleys) kann vermieden werden, was die Anwendungsmöglichkeit der erfindungsgemäßen Vertikalfördereinrichtung verbessert. Die Fördereinrichtung ist aufgrund des stationären Einbaus in nur einem Deck relativ unempfindlich gegenüber auftretenden Deformationen der Flugzeugzelle während des Flugs.

Weiterbildungen und vorteilhafte Ausgestaltungen sind in den Ansprüchen 2 bis 11 angegeben.

Weitere Einzelheiten und Vorteile ergeben sich aus der nachfolgenden Beschreibung eines Ausführungsbeispiels der Erfindung.

Die Erfindung ist im folgenden anhand von einem Ausführungsbeispiel erläutert und zeichnerisch in den Fign. 1 bis 3 dargestellt.

Es zeigen :
- Fig. 1: eine Perspektivdarstellung einer Vertikalfördereinrichtung,
- Fig. 2: eine Schnittdarstellung des Lifts gemäß Anspruch 1 im Auf- und Grundriss und
- Fig. 3: Bodenklappen in der Funktion als Tragplattform.

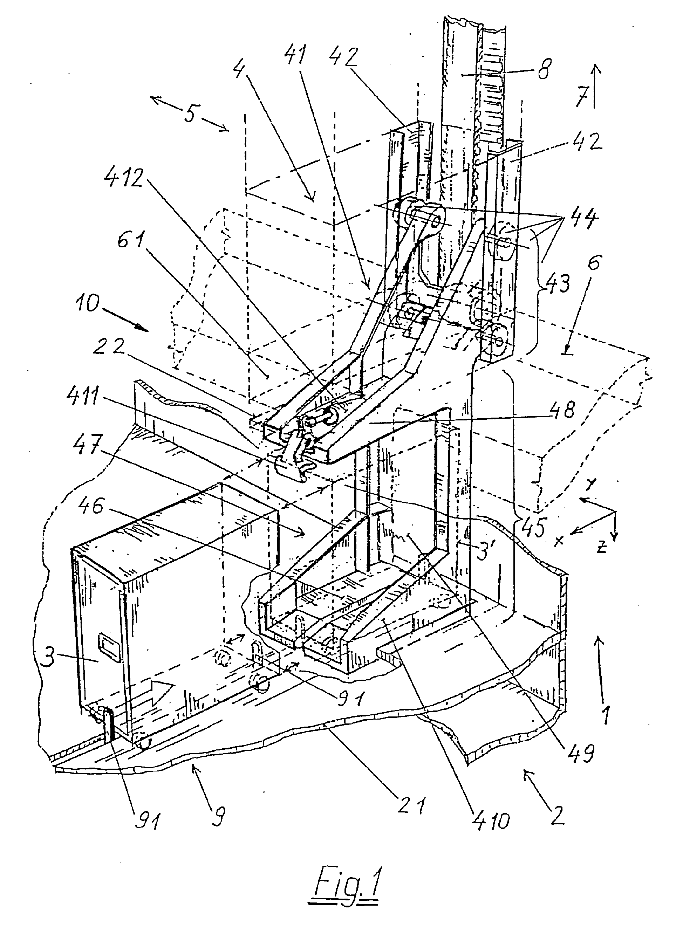

Die Fig. 1 gibt in einer Perspektivdarstellung einen Überblick über eine vertikalfördereinrichtung 10 für den Transport von Verpflegungsgütern in einem Flugzeug mit mindestens zwei übereinander angeordneten Decks. Die Vertikalfördereinrichtung 10 wird im folgenden auch Liftanlage genannt. Der Unterflur-Frachtraum 1 befindet sich unterhalb des Hauptdecks 6 und dient zur Aufnahme von Frachtcontainern als auch von Verpflegungscontainern 2. Ein Verpflegungscontainer 2 ist beispielsweise aufgebaut, wie aus Dokument DE 199 00 256 bekannt und kann mehrere Verpflegungsbehälter 3 aufnehmen. Die Container 2 werden von außen durch eine Frachttür in den Frachtraum 1 eingebracht und dort in Längsrichtung (x-Richtung) verschoben, wobei der Verpflegungscontainer 2 vorzugsweise unterhalb der Bordküche (Galley) 5 positioniert wird. Der Verpflegungscontainer 2 nimmt Verpflegungsgüter in Form von speziellen Behältnissen 3 wie z.B. Standard-Trolleys oder Boxen auf, welche am Container-Zwischenboden 21 gelagert sind und durch ein Horizontalfördersystem 9, z.B. mit Greifklauen 91 einzeln in Transportposition 3' bewegt werden. Die Begrenzung des Liftschachts 4 setzt sich durch eine Container-Deckenöffnung 22 nach unten fort.
Die Liftanlage 10 besteht aus den Hauptkomponenten Liftschlitten 41 - bestehend aus einer Lift-Oberstruktur 43 und einer Liftunterstruktur 45 -, Führungsschienen 42 und Antrieb z.B. mittels Zahnriemen 8. An der Lift-Oberstruktur 43 im Bereich des Hauptdecks sind Laufrollen 44 befestigt, welche sich in den vorzugsweise u-förmigen Führungsschienen 42 befinden. Die Lift-Unterstruktur 45 wird von oben durch die Öffnung 61 im Hauptdeck 6 und die Container-Deckenöffnung 22 bis zum Container-zwischenboden 21 abgesenkt. Somit ist gewährleistet, dass der Unterflur-Frachtraum 1 ohne feste Einbauten durchgängig bleibt zum ungehinderten Verschieben der Container 2. Durch dieses Liftkonzept werden außerdem etwaige flugzeugseitige Deformationen aufgenommen, da die vorne etwas konische Lift-Bodenplatte 46 eine Schrägstellung der Behälter 3 von einigen Grad als auch einen gewissen vertikalen Versatz relativ zum Boden 21 beim Einschieben der Behälter 3 ohne weiteres toleriert. Die Lift-Unterstruktur 45 besitzt eine vordere Öffnung 47, durch die der Behälter 3 auf die Bodenplatte 46 gelangt. Weitere Bestandteile der Unterstruktur 45 sind: Kragarm 48, Rückwand 49, Seitenarme 410 und eine Halteklappe 411. Die Unterstruktur 45 bildet damit eine C-förmige Aufnahme für den Behälter 3, der stirnseitig aufgenommen wird. Die Rückwand 49 ist ein Bestandteil eines Säulenelementes, welches gleichzeitig die Begrenzung und der Anschlag für die Stirnfläche des einzufahrenden Behälters 3 ist. Mittels dieser Anordnung wird ermöglicht, dass der Behälter 3 beispielsweise mittels Greifklauen 91 in die Unterstruktur 45 eingeschoben und dort durch die Halteklappe 411 sicher fixiert werden kann. Bedarfsweise ist dabei die Bodenplatte 46 zum Passieren der Greifklaue 91 geschlitzt ausgebildet. Hat der Behälter 3 seine Transportposition 3' erreicht, schwenkt die Halteklappe 411 mittels Stellzylinder 412 auf den Behälter ein und bildet so einen form- und kraftschlüssigen Verbund. Eine Aktivierung des Stellzylinders 412 kann durch Annäherungssensoren bzw. Annäherungsschalter (nicht gezeigt) erfolgen. Damit ist der Behälter 3 für den vertikaltransport zum Hauptdeck 6 und Oberdeck 7 gesichert. Diese Ausführung eines Liftschlittens 41 kommt bei der Aufnahme des Behälters ohne zusätzliche Beschläge am Behälter 3 aus.

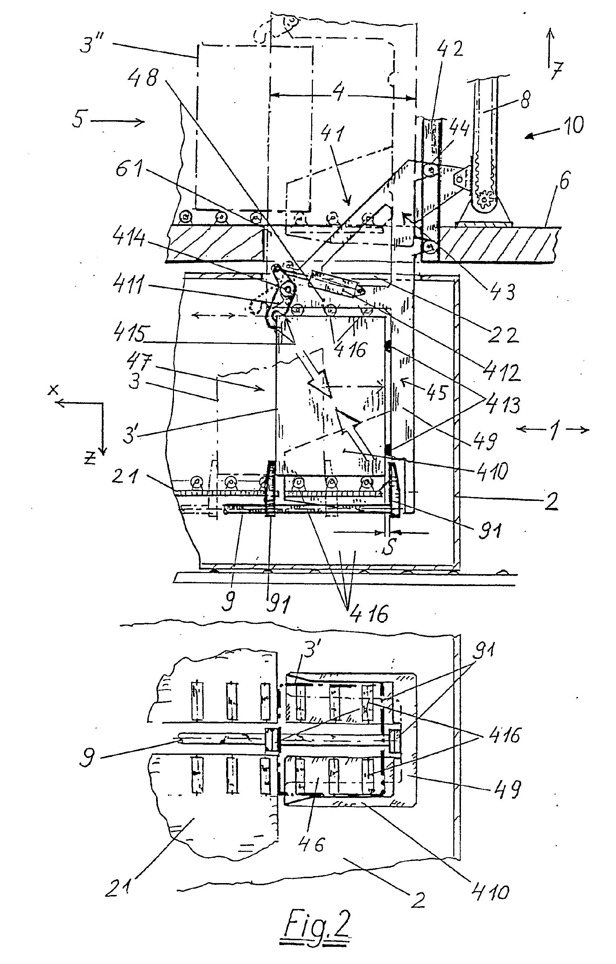

Fig. 2 zeigt die Liftanlage 10 im Schnitt in Auf- und Grundriss. Beispielhaft ist hier ein Behälter 3 ohne eigene Laufrollen dargestellt, der auf einer am Boden 21 montierten Rollenbahn mittels Greifklauen 91 in die Lift-Unterstruktur 45 und Transportposition 3' verschoben wird. Diese ist dann erreicht, wenn der Behälter 3 an den Druckkissen 413 anliegt, die an der Rückwand 49 angeordnet sind. Anschließend tritt die am oberen Rand der Öffnung 47 angeordnete Halteklappe 411 in Funktion und gewährleistet eine sichere Fixierung des Ladeguts, wobei die Drehachse 414 quer zur Behälter-Einschubrichtung (diese ist im Beispiel die x-Richtung) liegt. Mit dieser Achsanordnung ist es möglich, die durch Pfeile angedeutete Haltekraft auszuüben. Wie die Zeichnung zeigt, wird der Beladevorgang durch an der Bodenplatte 46 montierten Rollenbahnen 416 erleichtert. Diese können bedarfsweise zusätzlich auch an den Seitenarmen 410 oder am Kragarm 48 montiert sein. Nachdem die Fixierung des Behälters 3' durch die Halteklappe 411 abgeschlossen ist, lösen sich (im Fall einer geführten Bewegung) die Greifklauen 91 vom Behälter und die Vertikalbewegung kann einsetzen. Ein vorhandenes Spiel S erleichtert diesen Vorgang. Je nach Ausbildung des Horizontalfördersystems 9 weist die Bodenplatte 46 zum Verfahren der Greifklaue 91 einen Schlitz auf. Die Auslösung der Klappenbewegung 411 durch den Stellzylinder 412 erfolgt zweckmäßigerweise über einen Annäherungssensor (nicht dargestellt), wenn der Behälter die Transportposition 3' erreicht hat. Beim Entladevorgang 3" ist die Deaktivierung des Stellzylinders 412 manuell oder ebenfalls mittels Sensor durchführbar.

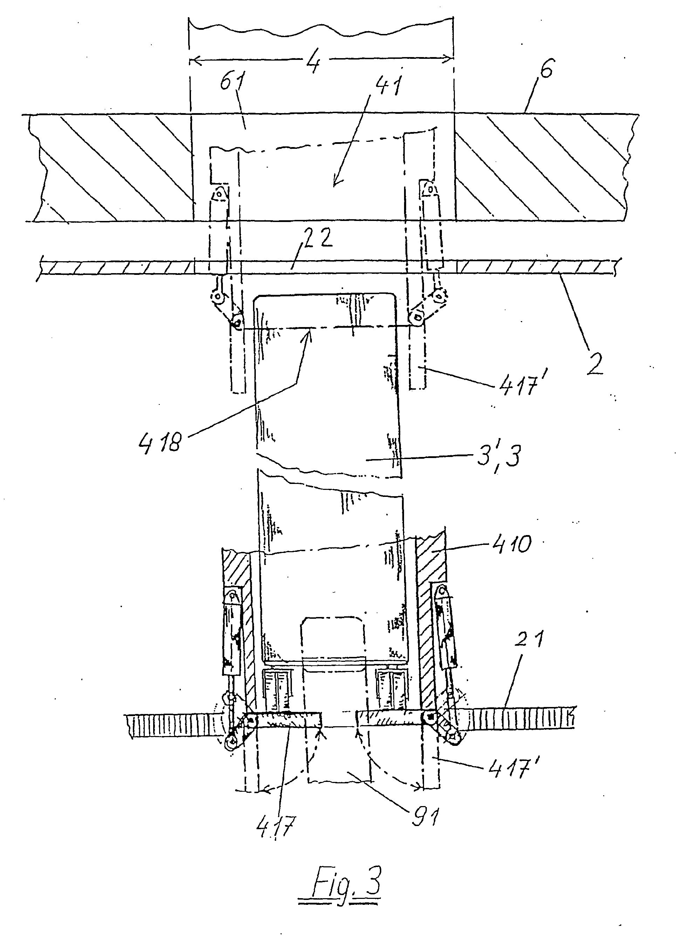

In Fig. 3 ist eine Variante des erfindungsgemäßen Lifts dargestellt, bei der das Ladegut 3 direkt durch den von oben kommenden Liftschlitten 41 erfasst werden kann. In diesem Fall befindet sich der Behälter 3 bereits in der Transportposition 3' unterhalb des Liftschachts 4, wenn der Lift von oben herabfährt. Dieser Funktionsablauf hat den Vorteil, dass das Horizontalfördersystem 9 den Behälter 3 gleichzeitig mit der Lift-Vertikalbewegung bereitstellen kann - es entfällt der Einschubvorgang -, wodurch sich die Zykluszeiten verkürzen lassen. Dieses Verfahren wird erfindungsgemäß durch steuerbare Bodenklappen 417 ermöglicht, deren Bewegung mittels Servozylinder oder Steuerhebel erreicht wird. Der Zyklusablauf erfolgt derart, dass zunächst die Greifklauen 91 den Behälter 3 in die Transportposition 3' verbringen und dort halten. Dann verfährt der von oben kommende Liftschlitten 41 mit ausgeschwenkten Bodenklappen 417' über den Behälter 3'. Bei Erreichen der untersten Liftposition schwenken die Klappen 417 ein und bilden so eine Tragplattform für das Fördergut. Anschließend wird dieses mittels der vorstehend beschriebenen Halteklappe 411 fixiert und die Greifklauen 91 geben es frei. Nachdem der Liftschlitten 41 das angewählte Deck (Hauptdeck 6 oder Oberdeck 7) erreicht hat, kann der Behälter 3 entladen werden, wobei die Bodenklappen 417 sich auf Höhe der jeweiligen Deckebene befinden. Im Falle, dass jetzt Leergut nach unten befördert wird, bleiben die Klappen in der Position als Tragplattform. Im anderen Fall, wenn der nächste Behälter 3 aus dem Verpflegungscontainer abgeholt werden soll, bewegen sich die Klappen in die ausgeschwenkte Position 417', während der Liftschlitten 41 nach unten fährt.

## Patentansprüche

1. Vertikalfördereinrichtung in einem Flugzeug mit mindestens zwei übereinander angeordneten Decks, wobei mit der Vertikalfördereinrichtung Verpflegungsgüter von einem als Frachtdeck ausgebildeten unteren Deck in ein oberes Deck zu transportieren sind, im wesentlichen bestehend aus einer Fördereinrichtung, die mit Führungsschienen zusammenwirkt, **dadurch gekennzeichnet, dass** die Führungsschienen (42) oberhalb des Frachtdecks angeordnet sind und die Fördereinrichtung als Liftschlitten (41) ausgebildet ist, der Liftschlitten (41) sich zusammensetzt aus einer Oberstruktur (43) mit Führungselementen (44), die mit den Führungsschienen (42) in Wirkverbindung stehen, und einer bei Transportposition in den Frachtraum hineinragenden Unterstruktur (45), die zur Aufnahme eines Behälters (3) mindestens einen die Oberseite des Behälters übergreifenden Kragarm (48), ein Säulenelement (49), die Seiten des Behälters (3) zumindest teilweise umfassende Seitenarme (410) sowie eine Bodenplatte (46) aufweist, wobei die Unterstruktur (45) eine gesicherte Aufnahme (47) für den Behälter (3) bildet.

2. Vertikalfördereinrichtung nach Anspruch 1, **dadurch gekennzeichnet, dass** die Unterstruktur (45) des Liftschlittens (41) eine C-förmigen Aufnahme (47) für den Behälter (3) bildet, in die der Behälter (3) einfahrbar und mittels einer am oberen Rand der Aufnahme (47) vorgesehenen Halteklappe (411) der Behälter (3) verriegelbar ist.

3. Vertikalfördereinrichtung nach einem der Ansprüche 1 oder 2, **dadurch gekennzeichnet, dass** als Führungselemente Laufrollen (44) vorgesehen sind, die in u-förmigen Führungsschienen (42) laufen.

4. Vertikalfördereinrichtung nach einem der Ansprüche 1 bis 3, **dadurch gekennzeichnet, dass** das Säulenelement (49) eine Rückwand umfasst, die Kontaktelemente (413) als Anschlag für den Behälter (3) enthält.

5. Vertikalfördereinrichtung nach einem der Ansprüche 1 bis 4, **dadurch gekennzeichnet, dass** die Bodenplatte (46) geschlitzt ausgebildet ist zur möglichen Bewegung von Greifklauen (91) eines Horizontalfördersystems (9).

6. Vertikalfördereinrichtung nach einem der Ansprüche 1 bis 5, **dadurch gekennzeichnet, dass** die Bodenplatte (46) mit Einfahrschrägen versehen ist.

7. Vertikalfördereinrichtung nach einem der Ansprüche 2 bis 6, **dadurch gekennzeichnet, dass** im Bereich des Kragarmes (48) eine Drehachse (414) quer zur Behälter-Einschubrichtung für die Halteklappe (411) angeordnet ist, die Halteklappe (411) durch Drehung um die Drehachse (414) nach dem Einschub des Behälters (3) einen verriegelten zustand einnimmt, wodurch der Behälter (3) während des Lifttransports in Einschubrichtung gesichert ist.

8. vertikalfördereinrichtung nach einem der Ansprüche 2 bis 7, **dadurch gekennzeichnet, dass** die Halteklappe (411) vor Inbetriebsetzen des Lifts und erst dann, wenn der Behälter (3) seine Transportposition (3') in der Unterstruktur (45) erreicht hat, durch einen aktivierbaren Stellzylinder (412) in Funktion tritt und dass beim Entladevorgang (3") die Deaktivierung des Stellzylinders (412) manuell oder mittels Sensor durchführbar ist.

9. Vertikalfördereinrichtung nach einem der Ansprüche 1 bis 8, **dadurch gekennzeichnet, dass** zumindest teilweise die Innenflächen der Unterstruktur (45) Rollenelemente (416) zur Stabilisierung und Führung des Behälters (3) aufweisen.

10. vertikalfördereinrichtung nach einem der Ansprüche 1 bis 9, **dadurch gekennzeichnet, dass** die Bodenplatte (46) durch Bodenklappen (417) gebildet wird, durch welche eine untere Öffnung (418) verschließbar ist.

11. Vertikalfördereinrichtung nach Anspruch 10, **dadurch gekennzeichnet, dass** jeweils eine Bodenklappe (417) an jeweils einem Seitenarm (410) angeordnet ist und die Bodenklappen (417) durch Servozylinder oder Steuerhebel bei den einzelnen Liftstationen vom eingeschwenkten in den ausgeschwenkten Zustand (417') steuerbar sind, wobei die Klappen (417) bedarfsweise eine Tragplattform oder eine Aufnahmeöffnung (418) für den Behälter (3'), (3'') bilden.

## Claims

1. Vertical conveyor system in an aircraft with at least two decks disposed one above the other, whereby catering supplies are transported by means of the vertical conveyor mechanism from a lower deck constituting a cargo deck to an upper deck, essentially comprising a conveyor mechanism co-operating with guide tracks, **characterised in that** the guide tracks (42) are disposed above the cargo deck and the conveyor mechanism is provided in the form of a lift carriage (41), which lift carriage (41) is made up of a top structure (43) with guide elements (44) actively co-operating with the guide tracks (42) and a bottom structure (45) projecting into the cargo space when in the transport position, which, in order to accommodate a container (3), has at least one cantilever (48) extending above the top face of the container, a pillar element (49), side arms (410) at least partially extending round the sides of the container (3) and a base plate (46), and the bottom structure (45) forms a secured mount (47) for the container (3).

2. Vertical conveyor system as claimed in claim 1, **characterised in that** the bottom structure (45) of the lift carriage (41) forms a C-shaped mount (47) for the container (3) in which the container (3) can be inserted, and the container (3) can be locked by means of a retaining flap (411) provided on the top edge of the mount (47).

3. Vertical conveyor system as claimed in one of claims 1 or 2, **characterised in that** guiding rollers (44) are provided as guide elements, which run in U-shaped guide tracks (42).

4. Vertical conveyor system as claimed in one of claims 1 to 3, **characterised in that** the pillar element (49) has a rear wall containing contact elements (413) as a stop for the container (3).

5. Vertical conveyor system as claimed in one of claims 1 to 4, **characterised in that** the base plate (46) is of a slotted design to enable gripping claws (91) of a horizontal conveyor system (9) to move.

6. Vertical conveyor system as claimed in one of claims 1 to 5, **characterised in that** the base plate (46) is provided with run-in ramps.

7. Vertical conveyor system as claimed in one of claims 2 to 6, **characterised in that** a pivot shaft (414) for the retaining flap (411) is disposed transversely to the container insertion direction in the region of the cantilever (48), which retaining flap (411) pivots about the pivot shaft (414) once the container (3) has been inserted and assumes a locked mode, as a result of which the container (3) is secured in the insertion direction during the lifting operation.

8. Vertical conveyor system as claimed in one of claims 2 to 7, **characterised in that**, the retaining flap (411) starts functioning by means of an activatable actuator cylinder (412) but before the lift is switched on and not until the container (3) has reached its transport position (3') in the bottom structure (45), and the actuator cylinder (412) may be deactivated manually or by means of sensors for the unloading operation (3'').

9. Vertical conveyor system as claimed in one of claims 1 to 8, **characterised in that** at least some of the internal faces of the bottom structure (45) have roller elements (416) for stabilising and guiding the container (3).

10. Vertical conveyor system as claimed in one of claims 1 to 9, **characterised in that** the base plate (46) is provided in the form of base flaps (417) by means of which a bottom opening (418) can be closed.

11. Vertical conveyor system as claimed in claim 10, **characterised in that** each base flap (417) is respectively disposed on a side arm (410) and the base flaps (417) can be controlled by servo-cylinders or control levers from an inwardly pivoted state to an outwardly pivoted state (417') at the individual lift stations, and the flaps (417) form a support platform or an accommodating opening (418) for the container (3'), (3'') as and when necessary.

## Revendications

1. Dispositif de transport vertical dans un avion comportant au moins deux ponts superposés et dans lequel des produits alimentaires doivent être transférés d'un pont inférieur constituant pont de fret à un pont supérieur, ce dispositif étant composé essentiellement d'un dispositif de transport coopérant avec des rails de guidage, **caractérisé en ce que** les rails de guidage (42) sont disposés au-dessus du pont de fret et que le dispositif de transport est constitué par un coulisseau élévateur (41) composé d'une structure supérieure équipée d'éléments de guidage (44) qui coopèrent avec les rails de guidage (42) et d'une structure inférieure (45) qui, en position de transport, pénètre dans l'espace de fret et qui présente, pour accueillir un récipient (3), au moins un bras de grue (48) en prise avec la face supérieure du récipient, un élément à colonne (49), des bras latéraux (410) entourant au moins en partie les côtés du récipient (3) ainsi qu'une plaque de plancher (46), cette structure inférieure (45) constituant un accueil sécurisé (47) pour le récipient (3).

2. Dispositif de transport vertical selon la revendication 1, **caractérisé en ce que** la structure inférieure (45) du coulisseau élévateur (41) constitue pour le récipient (3) un accueil (47) ayant la forme d'un C et dans lequel le récipient (3) peut être introduit et verrouillé au moyen d'un clapet de maintien (411) prévu le long du bord supérieur de l'accueil (47).

3. Dispositif de transport vertical selon la revendication 1 ou 2, **caractérisé en ce que** comme éléments de guidage sont prévus des galets de roulement (44) circulant dans des rails de guidage (42) en forme d'U.

4. Dispositif de transport vertical selon une des revendications 1 à 3, **caractérisé en ce que** l'élément à colonne (49) présente une paroi arrière qui contient des éléments de contact (413) jouant le rôle de butée pour le récipient (3).

5. Dispositif de transport vertical selon une des revendications 1 à 4, **caractérisé en ce que** la plaque de plancher (46) est fendue pour permettre le déplacement de griffes de saisie (91) appartenant à un système de transport horizontal (9).

6. Dispositif de transport vertical selon une des revendications 1 à 5, **caractérisé en ce que** la plaque de plancher est équipée de pente d'entrée.

7. Dispositif de transport vertical selon une des revendications 2 à 6, **caractérisé en ce que** dans la zone du bras de grue (48) est monté perpendiculairement à la direction d'engagement du récipient un axe de rotation (414) pour le clapet de maintien (411) qui, après introduction du récipient (3), par rotation autour de cet axe (414), prend une position de verrouillage qui, pendant le transport vertical, sécurise le récipient (3) dans la direction d'introduction.

8. Dispositif de transport vertical selon une des revendications 2 à 7, **caractérisé en ce que** le clapet de maintien (411), avant mise en action de l'élévateur et seulement une fois que le récipient (3) a atteint sa position de transport (3') dans la structure inférieure (45), est mis en fonction par un vérin de réglage (412) activable qui, lors de l'opération de déchargement (3") est désactivé manuellement ou par l'intermédiaire d'un capteur.

9. Dispositif de transport vertical selon une des revendications 1 à 8, **caractérisé en ce qu'**au moins partiellement les faces internes de la structure inférieure (45) portent des éléments à galet (416) pour stabiliser et guider le récipient (3).

10. Dispositif de transport vertical selon une des revendications 1 à 9, **caractérisé en ce que** la plaque de plancher (46) est constituée par des clapets de plancher (417) permettant d'obturer une ouverture inférieure (418).

11. Dispositif de transport vertical selon la revendication 10, **caractérisé en ce que** chaque clapet de plancher (417) est monté sur un bras latéral (410) et ces clapets, dans les divers postes de l'élévateur, peuvent être commandés par des vérins asservis ou des leviers de commande pour passer de l'état rabattu à l'état relevé (417'), ces clapets (417) formant selon besoin une plateforme porteuse ou une ouverture d'accueil (418) pour le récipient (3'), (3").
